# EUROPEAN PATENT APPLICATION

(11) **EP 0 644 248 A1**
(43) Date of publication of application: **22.03.1995**
(21) Application number: 94306726.4
(22) Date of filing: 14.09.1994
(51) Int. Cl.: C09K 3/32, C02F 1/68, E02B 15/04

(54) **Liquid sorbent article**

(30) Priority: 14.09.1993 GB 9318971
(71) Applicant: MINNESOTA MINING AND MANUFACTURING COMPANY, St. Paul, Minnesota 55133-3427 (US)
(72) Inventor: Fewtrell, James, Nevilles Cross Durham DH1 4JJ (GB)
(74) Representative: Bowman, Paul Alan

(57) **Abstract**

A liquid sorbent article comprising at least one layer of sorbent fibrous material and at least one hinge about which the article may be preferentially folded, the hinge being formed by permanently bonding fibres of said layer under pressure along a line. The sorbent material preferably comprises melt blown microfibres of polypropylene and the hinge is formed by a pressure weld from a blunt slitter roll.

## Description

The present invention relates to articles for containment and management of liquid spills and particularly to articles for containment, removal and recovery of liquid spills encountered in a manufacturing environment.

A variety of materials, delivered in numerous configurations, have been used for the management of liquid spills in manufacturing environments. These materials include granular absorbents, sheet and roll goods, and boom configurations consisting of a casing filled with particulate sorbent products such as clay, cellulose, chopped corn cobs, or chopped microfibrous materials. Several types of sorbent products are typically used at location because no one sorbent product is adaptable to the many spill situations encountered in a manufacturing environment.

Historically, loose granular clay particles have been the principal material used for spill management activities in a manufacturing environment. Clay particles were preferred because they were economical, capable of sorbing both oil or water based spills, easily applied to a spill and readily adaptable to a variety of situations such as spills on irregular surfaces or in minimal clearance situations (i.e., under machines). In spite of these advantages, clay particles have disadvantages in that they are easily tracked to locations adjacent the spill site and the cleanup operation is labour intensive, requiring brooms, shovels, dustpans and a variety of containment vessels.

The use of loose granular materials have been declining with the introduction of "dimensioned" sorbent articles, i.e., sheets or rolls of sorbent materials or booms consisting of porous casings which are filled with loose granular sorbent materials. Dimensioned sorbent articles offer the convenience of easy placement, the ability to deliver a larger mass of sorbent material to the spill site in a smaller volume than would be required with loose materials, less mess than loose granular materials and a cleanup that is considerably less labour intensive than with loose granular materials.

The liquid holding capacity of sorbent articles used in spill management activities is an important factor in the selection of sorbent articles as it is desirable to contain, remove and recover spilled liquids using the minimum amount of sorbent material. Equally important, however, is the rate at which the sorbent article picks up or sorbs the liquid spill. Rapid, high capacity pickup of a liquid spill provides improved safety and higher productivity in a manufacturing environment by reducing exposure to the spill and the time required for spill management activities.

U.S. Patent No. 4,956,129 discloses a sausage-shaped liquid-absorbing article which includes within a porous fabric, fine, fibrous particles of flash spun polyethylene, optionally particles of foamed organic polymer, and an effective amount of a wetting agent. The article is capable of absorbing oils or aqueous liquids in amounts equal to at least six times the weight of the particles.

U.S. Patent No. 4,792,399 discloses a liquid collecting and retaining device consisting of a tubular, triangular shaped casing of a material which is permeable to liquids, which is partially filled with a material that collect and retains liquids passing through the casing, and which is incapable of itself passing through the casing.

U.S. Patent No. 4,840,734 discloses a product for absorbing liquid leaks and spills which includes at least one closed cell with a cell wall permeable to liquid. An inorganic, inert absorbent is enclosed within the cell. Liquid contacting the product will pass through the cell wall and will be absorbed by the absorbent. A process for absorbing liquid leaks and spills is also provided.

U.S. Patent No. 4,775,473 discloses an absorbent article suitable for the absorption of aqueous as well as oleaginous liquids such as metal cutting fluids, hydraulic fluids, oils, and the like. The absorbent article is a spunlaced material sleeve closed at both ends and filled with an inherently flameproof particulate material, such as particulate clay material, having a certain particle size range. The spun laced material is liquid permeable, oleophilic and hydrophilic. The spunlaced material also has a liquid wicking rate that is at least equal to that of the particulate clay material contained within the sleeve. Preferred spunlaced materials are woodpulp/polyester spunlaced materials having a woodpulp-rich face and a polyester-rich face. The polyester-rich face is situated contiguous to the particulate absorbent material.

U.S. Patent No. 4,659,478 discloses an oil absorbing member and method which includes an elongate tubular member filled with a highly absorbent particulate material of capillary nature having a wicking action. The tubular member is closed at each end and can be arranged around a machine tool base as a continuous absorbing member.

In addition to the above referenced patents, there are a number of commercially available spill containment and recovery articles. For example, 3M Company, St.Paul, MN, sells a family of liquid sorbent articles designed to contain and recover liquid spills. These articles, which are based on sorbent microfibrous materials, include sheet goods for wiping and final cleanup operations, pillows designed for intermediate quantity liquid recovery, and booms, consisting of chopped microfibrous materials contained within an elongate casing having a substantially circular cross-section, which are used to contain and recover larger volume spills. These materials are described, for example, in 3M product bulletin "Maintenance Sorbents" No. 70-0704-062504(227.5) DPI.

The present invention provides alternative sorbent articles formed from sheet material.

According to the present invention there is provided a liquid sorbent article comprising at least one layer of sorbent fibrous material and at least one hinge about which the article may be preferentially folded, the hinge being formed by permanently bonding the fibres of the layer under pressure along a line.

It has been found that by providing sorbent sheet material with hinges formed by bonding fibres under pressure improves the strength characteristics of the article and facilitates use of the article in a variety of formats. For example, suitable positioning of the hinges allows the article to be fanfolded for packaging and in use the article can be used in the form of a sheet, minipillow or boom by simple folding to increase the thickness of the article.

The hinges enable the sheet material to adopt and maintain a folded configuration without the need for intermittent releasable bonds.

Preferably the hinges are formed by welding the fibres under pressure, more preferably by pressure welding without application of heat. The article is preferably constructed of at least two contiguous layers of sorbent material which are bonded together by a plurality of hinges and optionally at one or more edges. Such a two layer product has improved strength over a single layer article of the same basis weight.

The hinges are generally formed as a straight line extending across or along the length of the article. The hinges may be continuous or discontinuous providing the article may be preferentially folded along the line. The hinge may be formed with perforations along the line to facilitate tearing the sheet into desired sizes. Preferably the articles comprise a plurality of parallel hinges.

However, welds need not be formed in a straight line and may adopt other configurations, e.g., sinusoidal or zig-zag paths. Such configurations are particularly suitable for use with multilayers since it allows contiguous layers to be bonded in a similar manner to quilting. Furthermore, by suitable positioning of the welds it is possible to form a series of pockets between two contiguous layers which can be filled with particles, e.g., absorbents, indicators, neutralisers, etc. The pockets prevent the particles moving free about the material. Such particles may be dropped onto the lower web prior to application of the upper web and pressure welding. The blunt slitters used for pressure welding may have working edges adopting the desired sinusoidal or zig-zag configuration and are conveniently arranged such that the re-entrant portions of adjacent welds are adjacent thereby dividing the web into substantially discrete islands.

The pressure welding may conveniently be achieved using standard slitting equipment. Such equipment usually comprises of a hardened roller on to which rotary blades are pressed being held in place by slitter holders fixed to a bar. The webs are fed over the hardened roller (usually driven) and hence through the knives. Suitable holders are air pressure crush cutter holders, commercially available type PQAS from Dienes Werke. Suitable air pressures are about 6bar (90 psi) giving a force on the slitting blade of about 540 Newtons. When this force is applied over a flat width of 1 to 1.5mm on a blunted slitter wheel blade to a polyolefin blown micro fibre web, the resulting pressure weld has a strength that is equal to, or greater than, the strength of the blown micro fibre in its standard unwelded state; hence if the sheet is torn the weld will not be the weakest part. The slitting knives should not have sharp edges at the edges of the working surface to prevent cutting the web.

The articles of the present invention can be formed from any sorbent sheet material which can be bonded to form a hinge. Such sheet material include, for example nonwoven webs such as microfibrous sheet material, and wood pulp based webs which are well-known to those skilled in the art. The article generally has a basis weight of from 20 to 500g/m².

The articles of the present invention are preferably formed from sorbent microfibrous sheet materials, particularly melt blown microfibrous materials. Such materials are described, for example, in van Wente "Superfine Thermoplastic Fibres," Industrial Engineering Chemistry, vol. 48, pp. 1342 et seq. (1956), or in Report No. 4364, Naval Research Laboratories, May 25, 1954, "Manufacture of Superfine Organic Fibres" by van Wente , A., Boone, C.D., and Fluharty, E.L.

More preferably, the articles of the present invention are formed from melt blown microfibrous materials containing a surfactant topically applied or incorporated by direct addition of the surfactant to the molten polymer stream. Sorbent articles based on these materials are suitable for use on either oil or water based spills. Such materials having surfactant incorporated in the fibre are described in U.S. Patent No. 4,933,229 (Insley et al.), which is incorporated herein by reference.

The sorbent fibrous material is preferably capable of sorbing at least seven times its own weight of liquid, e.g., light mineral oil or water, over a period of 120 minutes.

Most preferably, the articles of the invention are formed from melt blown microfibre webs which contain microfibre microwebs and crimped bulking staple fibres as described in U.s. Patent No. 4,813,948 (Insley) which is incorporated herein by reference.

Polymeric materials suitable for use in preparing the microfibrous sheet material include, but are not limited to, polyolefins such as polyethylene and polypropylene and polyesters such as poly(ethylene terephthalate). The microfibrous sheet materials are preferably based on polyethylene, polypropylene, or blends of the two resins.

Other materials such as UV stabilizers, dyes, pigments, etc. can also be incorporated directly into the melt blown microfibrous sheet materials during the melt blowing process by blending the additive with the polymer prior to extrusion.

Articles of the present invention which are formed from melt blown microfibrous materials typically have sufficient strength, even when saturated with oil or an aqueous based liquid, that an outer facing is not required to maintain integrity. An optional outer facing may, however, be provided by applying a scrim material, for example, to the microfibrous sheet material prior to folding to improve the appearance of the article and coincidentally produce a more durable article. This can be accomplished by collecting the melt blown microfibrous material directly on the facing or alternatively bonding the facing to the microfibrous material by using an intermittent adhesive pattern or pin laminating the materials together. Facing material can also be applied to the microfibrous sheet material as a coating, for example, latex, at a level which does not substantially affect the sorbency of the microfibrous sheet material.

Scrim materials suitable for use in the preparation of the articles of the present invention preferably have a relatively open structure, such as obtainable with nonwoven fabrics or open weave woven fabrics, so that they can be readily penetrated by both oil and aqueous based fluids. Additionally, suitable scrim materials are preferably chemically inert. Particularly preferred scrim materials include spunbond nonwoven polypropylene fabrics such as 0.5 oz./yd² CELESTRA, available from Fiberweb North America, Inc.

The strength of the articles of the present invention may be further enhanced by sandwiching a mesh of higher strength than the sorbent fibrous material between the layers of the sorbent fibrous material. The mesh may be held in place by welds between the two layers made through the gaps in the mesh and/or by welding of the layers to the mesh. Preferably the mesh is fairly open, e.g, having mesh holes of at least 2mm x 2mm and at least 60% open space. Suitable mesh materials include woven materials of polypropylene or polyester fibres.

The sorbent articles of the present invention have excellent conformability, allowing them to readily adapt to changes in surface contour. This feature is particularly important in liquid containment situations where the liquid could flow under a sorbent article as a result of the article bridging undulations in surface contour rather then following the contour. Generally speaking, the conformability of the sorbent articles of the present invention is superior to the conformability of most commercially available sorbent articles having a boom-like configuration such as described in U.S. Patent No. 4,840,734 and U.S. Patent No. 4,792,399.

The conformability of the sorbent articles of the present invention readily allows the sorbent article to be formed into a variety of shapes to facilitate delivery of the articles from a delivery pack. For example, the sorbent article can be readily formed into a roll or fan-fold shape and placed in a dispenser box or container. In use , the desired length of sorbent article is simply unrolled or unfolded from the delivery pack and cut off. Alternatively, the roll or fan-fold could be perforated at regular intervals to provide convenient lengths. These delivery options stand in contrast to commercially available sorbent articles which are provided in a limited selection of lengths and widths. The limited size selection offered with most commercially available sorbent products can result in under utilization of the sorbent capacity of the article when a minimal spill situation is contained with a oversized sorbent article.

It has also become increasing more beneficial in spill management to separate the liquid spill material from the sorbent material or article so as to allow reuse of the fluid, segregation of the fluid for subsequent recovery operations and minimization of fluids in a landfill site. Separation or recovery is frequently accomplished by passing the fluid saturated sorbent articles through squeeze rollers. This technique is not suitable for use with most sorbent articles comprising porous casings filled with loose sorbent particulate materials. The squeezing action forces the loose particulates toward the end of the casing opposite the squeeze roller, rupturing the casing and scattering the sorbent particles. In contrast, the squeeze recovery process works very effectively with the sorbent articles of the present invention because the articles have a unified structure.

The invention will now be described with reference to the accompanying drawings in which:
Figure 1 illustrates possible configurations of an article in accordance with the invention; and
Figure 2 illustrates apparatus for forming an article in accordance with the invention.

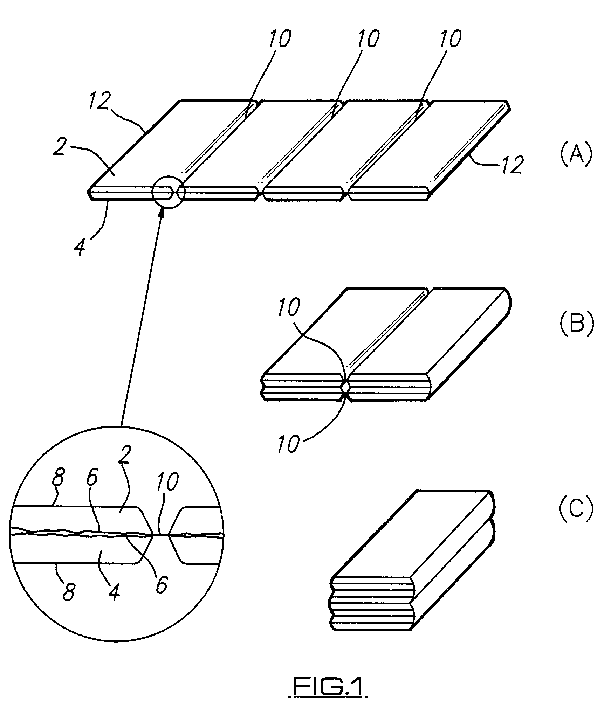

Figure 1 illustrates a two layer sorbent sheet material in accordance with the invention. The article comprises layers (2, 4) of blown microfibre web. Blown microfibre web is formed by extruding fibres through a die onto a collector. The side of the web that contacts the collector has a smooth relatively lint free surface finish. The other side is usually more ragged. Preferably the blown microfibre webs are arranged with the rough surfaces (6) in contact so that the outer surfaces (8) of the article are smooth thereby providing a satisfactory look and feel to the article.

The layers (2, 4) are bonded to each other by a series of parallel welds (10). The welds (10) are conveniently formed by passing the composite layers through blunt slitter rolls such that the two layers are welded together under the pressure without being slit. Alternatively, heat or ultrasonic welding may be employed, but this is not preferred. This forms lines down the web that hold the two layers together laminating the article and forming a plurality of hinges about which the material may be preferentially folded. The edges of the article (12) are conveniently welded by slitter rolls which cut and weld the two layers.

The hinges (10) allow the article to be neatly folded so that it may be used in a variety of configurations. Figure 1(A) shows the article in the form of a flat sheet, Figure 1(B) shows the article in the form of a mini pillow by folding the sheet double and Figure 1(C) shows the article in the form of a mini boom using four thicknesses of the article.

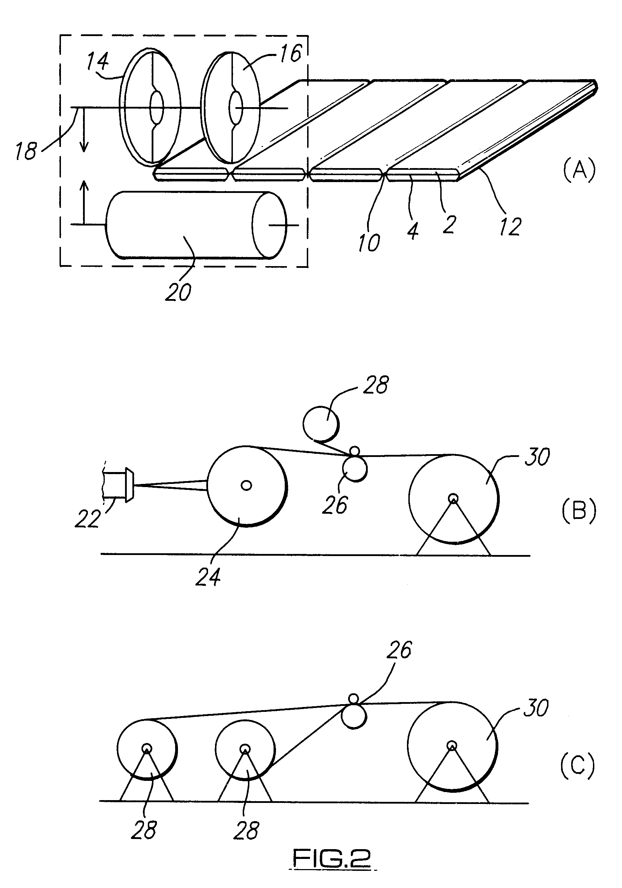

Figure 2(A) represents a diagrammatic illustration of apparatus suitable for producing articles in accordance with the invention. The apparatus comprises a plurality of blunt slitter rolls (16) for forming the hinges (10) and a cutting slitter roll (14) positioned for cutting and welding each edge (12) of the article. The slitter rolls (14, 16) are mounted for rotation about a common axis (18) and act on roller (20). The two layers (2, 4) are passed through the arrangement of slitter rolls which causes the edges (12) to be cut and welded and the formation of parallel hinges (10).

Figures 2(B) and 2(C) represent possible arrangements for combining layers (2, 4) together through slitter apparatus to form the article of the invention.

Figure 2(B) shows a die (22) forming microfibres which are blown onto a collector (24) which conveys the thus formed web of microfibres to a slitter (26) which may have the form of that illustrated in Figure 2(A). A second layer of sorbent material is unwound from a roll (28) and combined with the other layer at the slitter (26). The resultant article formed by bonding the layers is wound on roll (30) and thereafter may be cut to desired lengths.

The arrangement shown in Figure 2(C) utilises two rolls (28) of sorbent material which are unwound and the webs combined at the slitter (26), the resulting article being wound on to roll (30).

Articles in accordance with the invention as illustrated in Figures 1 and 2 have been made from two layers of polypropylene blown microfibre each layer have a basis weight of 150g/m². The two webs were fed through a slitter having two cutting slitter rolls positioned 44cm apart and blunt slitter rolls at intervals therebetween of 11cm. The resulting article can readily be folded into a stack of four webs of width 11cm, a minipillow of width 22cm or may be used as a flat sheet. The product may be fanfolded for packaging or rolled.

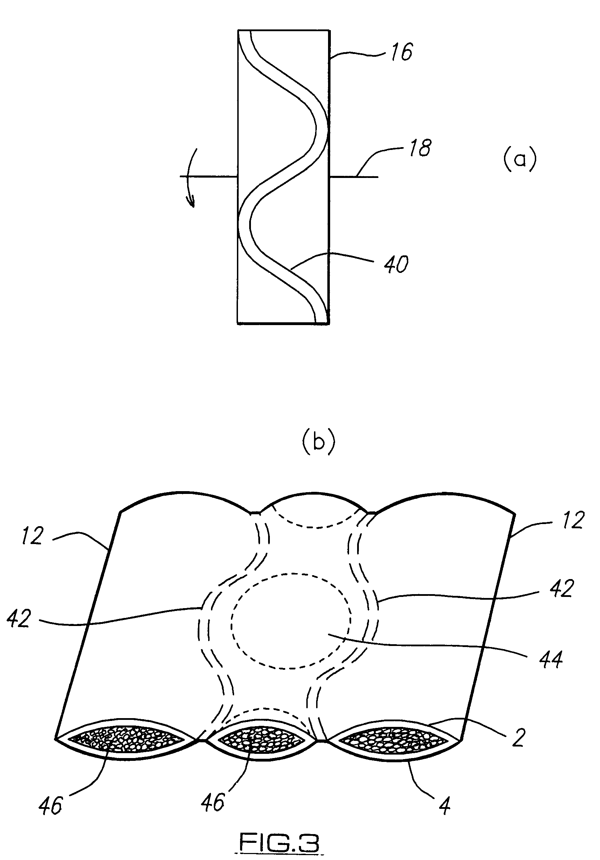

Figure 3a of the accompanying illustrates an alternative embodiment in accordance with the invention comprising layers (2,4) of blown microfibre web bonded to each other by edge welds (12) and sinusoidal welds (42). The edge welds (12) may be obtained by slitter rolls as in Figure 2 and the sinusoidal welds by blunt slitter rolls (Figure 3a) having a sinusoidal working edge (40). The welds (42) are positioned to form a series of islands (44) which contain particulate material (46) in the pocket formed between the layers (2,4). The particulate material is deposited on the lower layer (4) prior to application of the upper layer (2) before the composite is passed through the slitter rolls. The particulate material may comprise absorbent, indicator, neutralisers, etc.

The arrangement of the sinusoidal webs (42) prevents the particulate material from readily moving through the article during transportation, handling, etc. thereby ensuring the article retains uniform properties throughout its length.

Although articles in accordance with the invention are preferably formed from two layers of microfibre materials the methods described above may be readily adapted to provide articles comprising three or more layers of microfibre material. Likewise, pressure-welded hinges may be formed in a single layer of microfibre material.

## Claims

1. A liquid sorbent article comprising at least one layer of sorbent fibrous material and at least one hinge about which the article may be preferentially folded, the hinge being formed by permanently bonding fibres of said layer under pressure along a line.

2. A liquid sorbent article as claimed in Claim 1 in which the fibres are bonded by welding.

3. A liquid sorbent article as claimed in Claim 2 in which the fibres are bonded by pressure welding.

4. A liquid sorbent article as claimed in any preceding Claim comprising at least two contiguous layers of sorbent material bonded to each other by a plurality of said hinges.

5. A liquid sorbent article as claimed in Claim 4 in which the layers are additionally bonded at one or more edges of the article.

6. A liquid sorbent article as claimed in Claim 5 in which two parallel edges are bonded and the article comprises a plurality of straight hinges parallel to said bonded edges.

7. A liquid sorbent article as claimed in any one of Claims 1 to 5 in which the welds forming the hinges have a substantially sinusoidal or zig-zag configuration.

8. A liquid sorbent article as claimed in any one of Claims 4 to 7 which additionally comprises a mesh sandwiched between said layers, said layers being bonded through said mesh to form a hinge.

9. A liquid sorbent article as claimed in any one of Claims 4 to 7 which additionally comprises particulate material positioned between said contiguous layer, said particulate material being selected from absorbents, indicators, neutralisers and combinations thereof.

10. A liquid sorbent article as claim in any preceding Claim in which the sorbent fibrous material comprises blown microfibres.

11. A liquid sorbent article as claimed in Claim 10 in which the fibres are of polypropylene.

12. A method of making an article as defined in Claim 1 which comprises passing at least one web of sorbent material between a blunt slitter roll and a solid support to effect a pressure weld along a line thereby forming a hinge.

13. A method of making an article as claimed in Claim 12 in which a plurality of contiguous webs are passed through said blunt slitter.

14. A method of making an article as claimed in Claim 13 in which two contiguous layers of sorbent material are passed through a slitter apparatus comprising two cutting slitter rolls spaced apart and at least one blunt slitter roll positioned therebetween.

15. A method of making an article as claimed in Claims 12 to 14 in which the sorbent material comprises blown microfibres.

16. A method of making an article as claimed in Claim 15 in which the fibres are polypropylene.
